Europäisches Patentamt

(19) European Patent Office

Office européen des brevets

(11) Numéro de publication: **0 051 535**
**B1**

(12) **FASCICULE DE BREVET EUROPEEN**

(45) Date de publication du fascicule du brevet:
**27.08.86**

(21) Numéro de dépôt: **81401724.0**

(22) Date de dépôt: **28.10.81**

(51) Int. Cl.⁴: **C 04 B 37/00,** B 32 B 18/00,
B 32 B 9/00, C 04 B 35/52

(54) **Procédé de collage de pièces réfractaires.**

(30) Priorité: **30.10.80 FR 8023215**

(43) Date de publication de la demande:
**12.05.82 Bulletin 82/19**

(45) Mention de la délivrance du brevet:
**27.08.86 Bulletin 86/35**

(84) Etats contractants désignés:
**DE FR GB IT**

(56) Documents cités:
**FR - A - 1 349 372**
**FR - A - 2 028 129**
**FR - A - 2 189 207**
**FR - A - 2 260 726**
**FR - A - 2 401 888**
**FR - A - 2 416 391**
**US - A - 3 091 027**
**US - A - 3 616 045**
**US - A - 3 956 548**

**Le dossier contient des informations techniques
présentées postérieurement au dépôt de la demande et
ne figurant pas dans le présent fascicule.**

(73) Titulaire: **SOCIETE EUROPEENNE DE PROPULSION
(S.E.P.) Société Anonyme dite:, 3, avenue du Général de
Gaulle, F-92800 Puteaux (FR)**

(72) Inventeur: **Heraud, Louis, 140, avenue d'Eysines,
F-33200 Bordeaux (FR)**

(74) Mandataire: **Joly, Jean-Jacques et al, CABINET BEAU
DE LOMENIE 55, rue d'Amsterdam, F-75008 Paris (FR)**

## Description

La présente invention concerne un procédé de collage de pièces rigides mises en forme constitutives d'une structure à assembler et réalisées en un matériau réfractaire.

Pour l'assemblage de pièces réfractaires, il est connu d'utiliser des liaisons de type mécanique ou des liaisons par collage.

Les liaisons de type mécanique, par exemple le rivetage ou le vissage, nécessitent des usinages particuliers et précis sur les pièces à assembler. Il en résulte, d'une part, une augmentation du prix de revient et, d'autre part, un affaiblissement des propriétés des pièces assemblées, notamment de moins bonne tenue en fatigue, répartition des contraintes et fiabilité. Il s'y ajoute une perméabilité aux gaz et aux liquides.

Pour les liaisons par collage, plusieurs types de colle ont été utilisés, notamment des colles à liants organiques et des colles céramiques. Les colles à liants organiques ne sont efficaces que jusqu'à des températures d'utilisation des assemblages ne dépassant pas 250 à 300°C. Cette technique ne peut donc convenir pour l'assemblage de pièces réfractaires destinées à être utilisées à des températures très élevées. Or, les applications à haute température, par exemple la fabrication de structures composites pour des éléments de tuyères de propulseurs, est un domaine privilégié d'utilisation des pièces réfractaires.

Les colles céramiques de type ciment conservent certes leurs propriétés aux températures élevées, mais les liaisons ainsi réalisées ont une résistance trop faible pour que les assemblages puissent être sans risque soumis à des sollicitations mécaniques. Les colles céramiques réalisent plus un bourrage assurant l'étanchéité entre pièces réfractaires qu'une véritable liaison résistant à la rupture. Cet inconvénient limite donc considérablement les possibilités d'utilisation des assemblages ainsi réalisés.

La demande de brevet FR-A-2 028 129 divulgue un procédé de collage de corps poreux notamment en carbone artificiel ou graphite, procédé selon lequel on interpose entre les corps à assembler une couche de colle chargée de particules réfractaires et laissant, après thermolyse un résidu réfractaire poreux, et on réalise un traitement thermique au cours duquel un joint poreux contenant les charges est formé entre les corps assemblés.

Selon ce qui est indiqué dans le document FR-A-2 028 129, ce mode de collage, appliqués à des corps poreux en carbone, graphite, métaux frittés ou céramiques donne des résultats satisfaisants en ce que la solidité des zones de liaison est supérieure à celle des corps eux-mêmes.

Dans le domaine des matériaux composites, il a été proposé, pour la fabrication de disques de frein en carbone-carbone, de fixer une couche de fibres sur un corps de base non poreux, ou noyau, au moyen d'une résine interposée entre le corps de base et la couche de fibres ou en imprégnant celle-ci. On pourra se référer aux demandes de brevet FR-A-2 260 726 et FR-A-2 416 391. Après durcissement et carbonisation de la résine, une opération de densification est réalisée dans toute l'épaisseur de la couche poreuse. La densification peut être effectuée par dépôt chimique en phase vapeur.

Ce procédé permet d'obtenir une liaison satisfaisante de la couche de friction sur le corps de base en vue de l'application envisagée, mais ne traite pas du collage de deux pièces rigides, mises en forme avec formation d'un joint entre celles-ci.

Il a encore été proposé dans le brevet FR-A-1 349 372 de «souder» des pièces en matériau carboné par un joint de «soudure» entièrement en pyrocarbone. Les pièces à assembler doivent avoir été ajustées de façon très précise avant dépôt du joint. Un tel procédé ne fait pas appel à un collage intermédiaire des pièces à assembler avant l'opération de dépôt chimique en phase vapeur, et ne permet le traitement que d'un assemblage à la fois, dans des fours spécifiques de l'assemblage à réaliser.

La présente invention a pour but de fournir un procédé de collage de pièces rigides en matériau réfractaire permettant d'obtenir un assemblage avant une excellente tenue mécanique à haute température. Plus particulièrement, la présente invention vise à permettre la réalisation de structures complexes en matériau composite dont les dimensions ou la géométrie ne permettraient pas de les réaliser par densification d'une seule préforme poreuse, tout en obtenant des structures dont les propriétés mécaniques sont semblables à celles de pièces composites réalisées par densification de préformes en une seule pièce.

Ce but est atteint par un procédé de collage selon lequel, conformément à l'invention, on utilise des pièces composites constituées d'un renfort fibreux qui est en un matériau choisi parmi le carbone et les céramiques et qui est partiellement densifié par un matériau choisi parmi le carbone et les céramiques; on interpose entre les pièces réfractaires une couche d'épaisseur sensiblement constante comprise entre 0,1 et 1 mm et formée essentiellement par une colle laissant, après thermolyse, un résidu réfractaire poreux, et des charges constituées par des fines particules réfractaires de dimensions comprises entre 1 et 150 µm; on réalise un traitement thermique au cours duquel un joint poreux contenant lesdites charges est formé entre les pièces réfractaires poreuses par thermolyse de la colle; et on réalise la densification de l'ensemble constitué par les pièces poreuses et le joint poreux par dépôt chimique en phase vapeur d'un matériau réfractaire, de sorte que celui-ci est déposé simultanément au sein du joint et des pièces.

Ainsi, une des caractéristiques de l'invention consiste dans le choix, pour les pièces de départ de matériau composite formé par du carbone et/ou des céramiques.

Ces matériaux composites comprennent les composites carbone-carbone avec des renforts obtenus à partir de fibres de carbone ou de graphite, et les composites à matrices céramiques, renforcées par des fibres, le terme céramiques désignant les oxydes, carbures, borures, nitrures, siliciures, etc.

C'est la combinaison des caractéristiques suivantes qui permet de réaliser un collage procurant les propriétés mécaniques recherchées:

— utilisation de pièces réfractaires poreuses, ou pouvant passer à l'état poreux,

— collage au moyen d'une colle laissant après thermolyse un résidu réfractaire poreux et chargée de particules réfractaires, et

— densification par dépôt chimique en phase vapeur à la fois dans le joint poreux et dans les pièces réfractaires poreuses assemblées.

L'utilisation de pièces réfractaires poreuses présente l'avantage, d'une part, que les opérations de dépôt chimique en phase vapeur dans la structure des pièces à assembler et dans le joint entre ces pièces sont effectuées simultanément et, d'autre part, que la porosité des pièces permet l'infiltration au cœur du joint. Au regard de ce dernier point, il est préférable de réaliser l'assemblage des pièces à densifier lorsque la porosité de celles-ci est relativement importante, ce qui n'exclut pas la prédensification partielle des pièces avant leur assemblage. La porosité d'une ou de toutes les pièces réfractaires à coller peut résulter de la thermolyse de préformes imprégnées par une résine carbonisable.

L'utilisation d'une colle laissant un résidu poreux est nécessaire pour permettre la densification ultérieure du joint lors de la phase de dépôt chimique en phase vapeur. Quant à la présence des charges réfractaires, dans la colle, elle accroît la résistance mécanique du joint et elle permet de rattraper les irrégularités pouvant exister sur les surfaces à assembler et de réduire et diviser la porosité du joint après l'opération de thermolyse.

Lorsque l'on désire obtenir un résidu réfractaire carboné, il est préférable de choisir une colle contenant une résine ayant un taux de coke résiduel élevé. Le taux de coke résiduel est le pourcentage en poids des résidus de coke après thermolyse de la résine par rapport au poids initial de celle-ci. Un taux de coke résiduel élevé est supérieur à environ 40%. Il peut dépasser 70%. A titre indicatif, les résines utilisables sont celles du groupe phénol-formaldéhydes, les résines époxydes, les résines furaniques, et les brais de houille et de pétrole.

Lorsque l'on désire obtenir un résidu réfractaire autre que le carbone, on pourra choisir une colle de type céramique, par exemple un ciment silico-alumineux dans le cas d'assemblage de pièces en alumine avec un joint dans lequel on réalise en final un dépôt chimique en phase vapeur d'alumine.

De préférence, la colle utilisée doit avoir une viscosité permettant un mouillage convenable des surfaces à coller et la porosité créée par la thermolyse doit être ouverte pour être accessible au cours de la phase de dépôt chimique en phase vapeur. Cette porosité doit en outre être de dimensions relativement restreintes et régulières pour que son bouchage soit aussi complet et uniforme que possible.

Les particules réfractaires sont par exemple des grains de poudre de carbone, ou des fragments de fibres de carbone, des grains de silice, de carbure de silicium ou autre minéral réfractaire. Dans le cas où les charges sont des particules de carbone, la colle utilisée contient de préférence entre 20 et 50 parties en poids environ de résine et entre 60 et 140 parties en poids de charges carbonées. Lorsque les charges sont en un matériau autre que le carbone, la colle contient de préférence entre $60 \times$ et $140 \times$ parties en poids de charges, $\times$ étant le rapport entre la densité du matériau constitutif des charges et la densité du carbone.

Pour la mise en œuvre du procédé conforme à l'invention, les surfaces des pièces à coller et la colle sont d'abord préparées.

La préparation de surface consiste dans des opérations habituelles de nettoyage telles que ponçage, dépoussiérage et dégraissage.

Lorsque la colle est à base d'une résine, elle est préparée en malaxant la résine avec un durcisseur éventuel et les charges réfractaires. La colle est de préférence conservée sous vide.

Les surfaces à assembler sont encollées, par exemple à la spatule, et accostées. L'accostage est réalisé avec une pression suffisante pour que la colle flue dans le joint. L'épaisseur du joint est réglée au moyen de cales d'épaisseur calibrée, par exemple des billes de verre; cette épaisseur est choisie égale à une valeur comprise entre 0,1 mm et 1 mm. Les cales d'épaisseur sont en un matériau ne réagissant pas avec le matériau du joint à haute température et ne pouvant pas constituer une pollution du joint de colle.

La colle est ensuite réticulée en général au cours d'un cycle de cuisson réalisé en étuve ou en autoclave. La durée de ce cycle et la température de cuisson sont fonctions des constituants de la colle, par exemple de la résine et du durcisseur éventuel utilisés.

Après réticulation, un traitement de post-cuisson peut être effectué. Ce traitement permet de libérer les contraintes internes présentes dans le joint et qui pourraient se traduire par l'apparition de fissures dans ce joint ou à l'interface joint-pièce lors de la thermolyse de la colle. Il est à noter que la post-cuisson n'est généralement pas une étape nécessaire.

Après les opérations de réticulation et, éventuellement, de post-cuisson, on effectue un traitement de thermolyse de la colle du joint. La thermolyse est effectuée à une température supérieure à 300 °C et de préférence atteignant 800 à 1000 °C pour que la thermolyse soit totale au bout d'un temps assez court.

Après thermolyse, le joint se présente sous forme d'un résidu réfractaire poreux contenant les charges ajoutées initialement à la colle.

L'opération suivante consiste dans le dépôt de matériau réfractaire de façon relativement homogène dans la totalité du volume du joint et des pièces réfractaires par la technique de dépôt chimique en phase vapeur. Cette technique peut être mise en œuvre suivant les différentes façons connues habituellement utilisées.

Le dépôt chimique en phase vapeur consiste à mettre en contact la structure poreuse avec un gaz constitué d'une ou plusieurs espèces chimiques contenant les éléments à déposer et généralement d'une ou plusieurs espèces chimiques susceptibles d'être utilisées comme agents réactifs, d'entraînement, et/ou de dilution. Dans certaines conditions de température, de pression et de débit, le transfert des gaz par diffusion et leur décomposition avec libération des éléments à déposer sur le substrat, est possible jusqu'au cœur de la structure poreuse.

On pourra se référer au brevet des Etats-Unis d'Amérique no 3 895 094 et à la demande de brevet publiée FR-A-2 189 207 qui décrivent un procédé de dépôt chimique en phase vapeur de carbone et à la demande de brevet publiée FR-A-2 401 888 qui décrit un procédé de dépôt chimique en phase vapeur de matériaux réfractaires autres que le carbone, notamment des carbures de silicium, de bore ou des éléments de transition, des diborures des éléments de transitions, des nitrures de silicium ou de bore, des siliciures métalliques, etc.

Le matériau réfractaire infiltré par dépôt chimique en phase vapeur peut être du carbone pyrolytique ou un matériau céramique tel que, par exemple, du carbure de silicium, de l'alumine, du carbure de titane ou du carbure de zirconium. Le matériau infiltré peut être ou non le même que celui constitutif du résidu poreux obtenu après thermolyse de la colle ou que celui constitutif des pièces réfractaires. Par exemple, on pourra déposer un matériau réfractaire autre que le pyrocarbone à l'intérieur d'un joint carboné résultant de la pyrolyse d'une résine, et à l'intérieur de pièces réfractaires carbonées.

Lorsque la phase de dépôt chimique en phase vapeur est effectuée à une température supérieure à celle nécessaire pour la thermolyse de la colle, cette thermolyse peut être réalisée au cours de la montée en température précédant l'introduction des composants gazeux nécessaires au dépôt chimique en phase vapeur.

Les pièces collées conformément à l'invention peuvent être usinées à leur forme définitive sans que cela pose de problèmes particuliers.

Les exemples particuliers donnés ci-après à titre indicatif mais non limitatif montrent l'excellente tenue aux sollicitations mécaniques et aux températures élevées des collages réalisés conformément à l'invention.

Pour ces exemples, on se référera au dessin joint qui illustre:

– figures 1 et 2: des vues schématiques en perspectives de deux ensembles de deux pièces assemblées par le procédé conforme à l'invention,

– figure 3: une vue partielle en coupe méridienne d'une structure assemblée par le procédé conforme à l'invention, et

– figure 4: une vue partielle en coupe suivant la ligne IV–IV de la figure 3.

Exemple 1

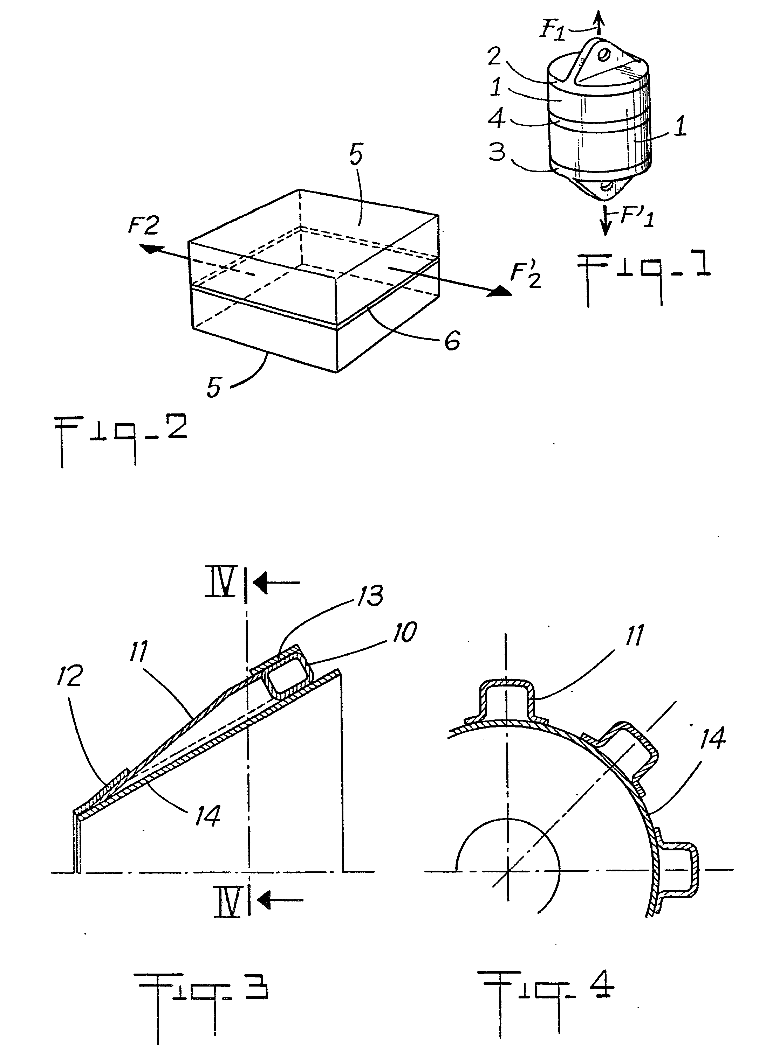

Des échantillons en forme de petits disques 1 (fig. 1) de diamètre 30 mm et d'épaisseur 10 mm ont été réalisés en matériau composite constitué d'un renfort tridimensionnel tissé en fibres de carbone densifié partiellement par dépôt de carbure de silicium en phase vapeur. Les échantillons 1 ont ensuite été collés deux à deux, soit avec une colle contenant 100 parties en poids de poudre de carbure de silicium de 100 µm de diamètre et 35 parties en poids de résine phénolique, soit avec une colle contenant 100 parties en poids de poudre de carbone de 30 µm de diamètre moyen et 30 parties en poids de résine furanique.

Les éprouvettes ont été fabriquées par encollage des surfaces des échantillons et accostage en ménageant des joints 4 de 0,2 mm d'épaisseur. Les résines ont été ensuite réticulées à chaud puis thermolysées jusqu'à 800 °C.

Après thermolyse, certaines des éprouvettes ont été soumises, soit au dépôt de pyrocarbone, soit au dépôt de carbure de silicium par dépôt chimique en phase vapeur. Les faces planes des éprouvettes 1 obtenues ont ensuite été collées avec une colle époxyde sur deux supports métalliques (2, 3) permettant de réaliser un essai en traction parallèlement à leur axe (forces F1, F'1). Les ruptures en traction se sont produites dans les joints entre échantillons pour des contraintes de 9 MPa environ dans le cas des joints avec dépôt de pyrocarbone, et à l'interface joint-échantillon pour des contraintes de 17 MPa environ dans le cas des joints avec dépôt de carbure de silicium.

A titre de comparaison, après thermolyse, d'autres éprouvettes ont été collées directement sur deux supports métalliques de la même façon qu'indiqué pour les éprouvettes précédentes. Les ruptures en traction se sont produites dans les joints entre échantillons pour des contraintes voisines de 0,5 MPa, quelle que soit la composition de la colle adoptée pour les joints. On constate donc l'augmentation considérable de résistance en traction apportée par l'opération de dépôt chimique en phase vapeur dans le joint poreuxmême.

Exemple 2

Des échantillons en forme de plaques 5 (figure 2) ont été réalisés en matériau composite carbone-carbone constitué d'un renfort formé par un empilement de strates en tissu de carbone densifié partiellement par dépôt de pyrocarbone en phase vapeur. Les échantillons formaient des parallélépipèdes rectangles de mêmes dimensions 30 × 25 × 10 mm.

La colle utilisée contenait 100 parties en poids de poudre de carbone pour 30 parties en poids de résine furanique.

Des éprouvettes ont été fabriquées par encollage des surfaces de deux échantillons et accostage en ménageant des joints de 6 de 0,2 mm et de 0,5 mm d'épaisseur. La résine a été ensuite réticulée à chaud.

Après réticulation, les éprouvettes dont le joint avait 0,2 mm d'épaisseur ont montré une résistance au cisaillement interlaminaire de 0,5 MPa environ, tandis que les éprouvettes dont le joint avait 0,5 mm d'épaisseur ont montré une résistance au cisaillement interlaminaire de 0,2 MPa. Les essais ont été réalisés en soumettant les plaques 5 de chaque éprouvette testée respectivement à deux forces F2 et F'2 (figure 2) égales et opposées, orientées parallèlement aux plaques 5. Les ruptures se sont produites dans les joints 6.

Des éprouvettes fabriquées comme précédemment avec des joints de 0,2 et 0,7 mm d'épaisseur ont été soumises, après réticulation, à la thermolyse de la résine puis au dépôt de pyrocarbone ou de carbure de silicium par dépôt chimique en phase vapeur.

Dans le cas de dépôt de pyrocarbone, les tenues au cisaillement mesurées ont été de 9,5 à 14 MPa pour des joints de 0,2 mm d'épaisseur et d'environ 9,5 MPa pour des joints de 0,7 mm d'épaisseur.

Les ruptures se sont produites dans les joints les plus épais mais la plupart des ruptures sur les éprouvettes avec joints minces se sont produites à l'interface joint-matériau ou au sein du matériau. Certaines des éprouvettes obtenues après dépôt de pyrocarbone dans le joint ont été soumises à une température de 2800 °C avant l'essai de cisaillement. La valeur mesurée de résistance au cisaillement a été voisine de 6 MPa pour des joints de 0,2 mm d'épaisseur.

Dans le cas de dépôts de carbure de silicium, les tenues ou cisaillement mesurées ont été de 11 à 20 MPa et les ruptures se sont toujours produites à l'interface joint-matériau ou au sein du matériau.

Exemple 3:
On a réalisé l'assemblate de trois couches en matériau composite carbone-carbone pour réaliser un disque de frein d'avion, les deux couches latérales constituant les couches de frottement.

Les couches latérales ont été obtenues chacune à partir d'un tissu de carbone découpé en strates en forme de disques, lesquelles ont été superposées. L'empilement a été placé dans un outillage, pour rigidification par dépôt de pyrocarbone, comme connu en soi. Chaque préforme ainsi obtenue a ensuite été usinée par rectification à sec à l'aide d'une meule diamantée. L'état de surface obtenu était relativement grossier.

La couche centrale a été obtenue à partir du même tissu que dans le cas des couches latérales, mais le tissu a été découpé en secteurs annulaires de 90° disposés bord à bord pour minimiser les chutes de tissu. Comme précédemment, les strates de tissu ont été rigidifiées et densifiées partiellement par dépôt de pyrocarbone et la couche centrale a ensuite été usinée.

Les surfaces à assembler ont été seulement dépoussiérées avant encollage au moyen d'une colle contenant 100 parties en poids de poudre de carbone et 35 parties en poids de résine furanique et à laquelle ont été ajoutées des billes de verre de 0,2 mm de diamètre au taux de 3% en volume.

Les couches encollées ont été placées entre deux plaques métalliques et la pression nécessaire au fluage de la colle a été appliquée à l'aide de serre-joints, les billes de verre formant cales d'épaisseur. Les couches ainsi maintenues ont été placées dans une étuve où elles ont subi un cycle de réticulation comportant une première phase de cinq heures à 100 °C suivie d'une deuxième phase de 15 heures à 120 °C.

Après avoir ôté l'outillage de maintien, les couches assemblées ont été placées dans une enceinte pour le dépôt chimique de pyrocarbone en phase vapeur de façon connue en soi. Ce dépôt a été précédé d'une montée rapide en température au cours de laquelle la thermolyse de la résine a eu lieu.

Le disque ainsi réalisé a été soumis à un traitement à très haute température sans que sa tenue soit compromise. Essayé en freinage sur avion, le disque a donné entière satisfaction.

Exemple 4:
Différentes pièces ont été réalisées en matériau composite carbone-carbone pour la construction de veines de tuyères d'engins.

Pour réaliser un assemblage, on a utilisé une pièce de col de tuyère obtenue à partir d'un renfort multi-directionnel en fibres de carbone densifié partiellement par du coke de résine, et deux pièces en amont du col obtenues à partir de tissu de carbone découpé en strates entières rigidifiées et densifiées partiellement par infiltration de pyrocarbone.

Les pièces à assembler ont été encollées comme indiqué dans l'exemple 2 et la résine de la colle a subi un cycle de réticulation de 50 heures à 75 °C.

L'ensemble a ensuite été traité thermiquement à très haute température puis usiné à sa forme définitive avant infiltration de pyrocarbone par dépôt chimique en phase vapeur.

Sur l'assemblage ainsi obtenu, un divergent a été monté pour constituer une tuyère d'engin. L'assemblage a montré une tenue en tir satisfaisante malgré un violent choc thermique, des sollicitations mécaniques importantes et bien que les différentes pièces assemblées n'étaient pas constituées par le même matériau.

Exemple 5:
Le procédé d'assemblage conforme à l'invention a permis de réaliser un carter de tuyère réfractaire rigide de conception nouvelle à partir de pièces caissonnées en matériau composite carbone-carbone poreux partiellement densifié.

Les différentes pièces utilisées sont un anneau creux 10 (figures 3, 4) assurant la rigidité de l'ensemble dans son plan, des nervures caissonnées 11 assurant la rigidité de l'ensemble en flexion et compression axiale et des voiles et cônes de liaison 12, 13, 14 liés aux nervures 11 et à l'anneau 10 par assemblage conformément à l'invention.

La pièce tronconique 14 forme la face intérieure du carter et porte, sur sa face extérieure les nervures longitudinales caissonnées 11 et l'anneau creux de rigidification 10 (figure 3). Le voile 12 est disposé à l'extrémité du plus petit diamètre du carter et entoure les extrémités amincies des nervures 11 et l'extrémité du tronc de cône 14. Le voile 13 est disposé à l'autre extrémité du carter et entoure les autres extrémités des nervures 11 et l'anneau 10 (voir figure 3).

Les différentes pièces constitutives de l'assemblage ont été réalisées par moulage d'un matériau constitué de tissu de carbone noyé dans une matrice en résine phénolique. Après moulage, les pièces ont été poncées pour éliminer la peau de la résine, puis dégraissées.

Une colle semblable à celle utilisée dans l'exemple 2 a été appliquée sur les surfaces à assembler. L'ensemble a ensuite suivi un cycle de cuisson à 120° pour réticulation de la résine de la colle.

Après cette réticulation, l'ensemble a été soumis à un traitement de thermolyse pour transformer la résine du matériau composite des pièces et la résine des joints de colle en coke. Le produit réfractaire poreux ainsi obtenu a été ensuite placé dans une enceinte où l'on a procédé au dépôt chimique de pyrocarbone en phase vapeur dans l'ensemble du produit de manière à consolider les joints de colle et à donner au matériau composite des différentes pièces ses propriétés définitives.

L'assemblage réalisé a montré une tenue mécanique et thermique satisfaisante, ce qui n'aurait pu être obtenu par les procédés d'assemblage connus.

Exemple 6:

Un creuset a été réalisé en assemblant une pièce cylindrique et une plaque circulaire constituées d'un feutre de carbone partiellement densifié par dépôt chimique en phase vapeur de carbure de silicium. Lors du collage des pièces, leur porosité résiduelle était voisine de 50% en volume.

La colle contenait 100 parties en poids de poudre de carbure de silicium de granulométrie comprise entre 50 et 150 µm, et 100 parties en poids de résine donnant du carbure de silicium par thermolyse. Après encollage des surfaces et accostage en ménageant un joint de 0,5 mm d'épaisseur, le creuset a été placé dans un four de dépôt chimique en phase vapeur de carbure de silicium où le joint a été thermolysé, et le joint et les deux parties constituant le creuset ont été densifiés par le dépôt de carbure de silicium au cours d'une même opération.

Le creuset a ensuite été utilisé avec succès pour l'électrolyse de l'acide sulfurique à 650°C sous une pression de 7 bars.

**Revendications**

1. Procédé pour le collage de pièces rigides mises en forme constitutives d'une structure à assembler et réalisées en un matériau réfractaire qui est poreux ou susceptible de le devenir par traitement thermique, ledit procédé comportant les étapes qui consistent à: interposer entre des surfaces en regard des pièces à coller une couche d'épaisseur sensiblement constante comprise entre 0,1 et 1 mm et formée essentiellement par une colle laissant, après thermolyse, un résidu réfractaire poreux, et des charges constituées par des fines particules réfractaires de dimensions comprises entre 1 et 150 µm; et réaliser un traitement thermique au cours duquel un joint poreux contenant lesdites charges est formé entre les pièces réfractaires poreuses par thermolyse de la colle; procédé caractérisé en ce que l'on utilise des pièces composites constituées d'un renfort fibreux qui est en un matériau choisi parmi le carbone et les céramiques et qui est partiellement densifié par un matériau choisi parmi le carbone et les céramiques, et, après formation et thermolyse du joint, l'on réalise une étape de densification en soumettant l'ensemble constitué par les pièces poreuses et le joint poreux à une opération de dépôt chimique en phase vapeur d'un matériau réfractaire, de sorte que celui-ci est déposé simultanément au sein du joint et des pièces.

2. Procédé selon la revendication 1, caractérisé en ce que la thermolyse de la colle est réalisée au cours de la montée en température effectuée en vue du dépôt chimique en phase vapeur.

3. Procédé selon l'une quelconque des revendications 1 et 2, caractérisé en ce que la densification est réalisée par dépôt chimique en phase vapeur de pyrocarbone.

4. Procédé selon l'une quelconque des revendications 1 et 2, caractérisé en ce que la densification est réalisée par dépôt chimique en phase vapeur d'un matériau céramique.

5. Procédé selon la revendication 4, caractérisé en ce que le matériau céramique est du carbure de silicium.

6. Procédé selon l'une quelconque des revendications 1 à 5, caractérisé en ce que l'on interpose entre les pièces à coller une couche de matière contenant 20 à 50 parties en poids de résine et 60 × à 140 × parties en poids de charges, × étant le rapport entre la densité du matériau constitutif des charges et la densité du carbone.

7. Utilisation du procédé selon l'une quelconque des revendications 1 à 6 pour la fabrication d'un carter de tuyère rigide par collage de pièces réalisées en matériau composite carbone-carbone poreux partiellement densifié.

**Claims**

1. Process for bonding together rigid preformed pieces constituting a structure to be assembled, each made in a refractory material which is porous or capable of becoming porous by thermal treatment, said process including the steps of interposing between the faces opposite to each other of the pieces to be bonded together, a layer of substantially constant thickness between 0.1 and 1 mm, and essentially composed of an adhesive which, after thermolysis, leaves a porous refractory residue, and fillers constituted by refractory particles of dimensions comprised between 1 and 150 microns, and of performing a thermal treatment during which a porous bond containing said fillers is formed between said refractory porous pieces by thermolysis of the adhesive; process characterized in that composite pieces composed of a fibrous reinforcement which is made in a material selected from carbon and ceramics, and partially densified by a material selected from carbon and ceramics, are used, and after formation and thermolysis of the bond, a step of densification is performed by subjecting the assembly constituted by the porous pieces and the porous bond to an operation of chemical vapour deposition of a refractory material, so that the latter is deposited simultaneously in the bond and in the pieces.

2. Process according to claim 1, characterized in that the thermolysis of the adhesive is performed during the rise in temperature effected for the chemical vapour deposition.

3. Process according to any one of claims 1 and 2, characterized in that the densification is effected by chemical vapour deposition of pyrolitic carbon.

4. Process according to any one of claims 1 and 2, characterized in that the densification is effected by chemical vapour deposition of a ceramic material.

5. Process according to claim 4, characterized in that the ceramic material is silicon carbide.

6. Process according to any one of claims 1 to 5, characterized by the interposition between the pieces to be bonded together of a layer of material containing 20 to 50 parts by weight of resin and $60 \times$ to $140 \times$ parts by weight of fillers, $\times$ being the ratio of the density of the material constituting the fillers to the density of carbon.

7. Use of the process according to any one of claims 1 to 6 for manufacturing a rigid nozzle housing by bonding together pieces made in a porous and partially densified carbon-carbon composite material.

**Patentansprüche**

1. Verfahren zum Kleben von starren Formteilen, die Bestandteil einer zusammenzubauenden Konstruktion und in einem hitzefesten Material ausgeführt sind, das porös ist oder dies durch Wärmebehandlung werden kann, wobei das Verfahren aus folgenden Schritten besteht:
– zwischen gegenüberliegenden Flächen der zu klebenden Teile erfolgendes Vorsehen einer Schicht, die im wesentlichen eine konstante Dicke von 0,1 bis 1 mm hat und im wesentlichen aus einem Klebstoff besteht, der nach einer Thermolyse einen porösen hitzefesten Rückstand und Füllstoffe übrig lässt, die aus feinen hitzefesten Teilchen bestehen mit Abmessungen von 1 bis 150 µm, und
– Ausführen einer Wärmebehandlung, in deren Verlauf zwischen den porösen hitzefesten Teilen durch Thermolyse des Klebstoffs eine die Füllstoffe enthaltende poröse Fuge gebildet wird, dadurch gekennzeichnet,
– dass man zusammengesetzte Teile verwendet, die aus einer faserhaltigen Verstärkung bestehen, die aus einem unter Kohlenstoff und Keramik ausgewähltem Material besteht und teilweise durch ein unter Kohlenstoff und Keramik ausgewähltes Material verdichtet wird, und
– dass man nach Bildung und Thermolyse der Fuge einen Verdichtungsschritt dadurch ausführt, dass die durch die porösen Teile und die poröse Fuge gebildete Anordnung einem Vorgang zur chemischen Ablagerung in Dampfphase eines hitzefesten Materials derart unterworfen wird, dass dieses gleichzeitig inmitten der Fuge und der Teile abgelagert wird.

2. Verfahren nach Anspruch 1, dadurch gekennzeichnet,
– dass die Thermolyse des Klebstoffs im Verlauf des Temperaturanstiegs erfolgt, der im Hinblick auf die chemsiche Ablagerung in Dampfphase ausgeführt wird.

3. Verfahren nach einem der Ansprüche 1 und 2, dadurch gekennzeichnet,
– dass die Verdichtung durch chemische Ablagerung in Dampfphase von Pyrokohlenstoff erfolgt.

4. Verfahren nach einem der Ansprüche 1 und 2, dadurch gekennzeichnet,
– dass die Verdichtung durch chemische Ablagerung in Dampfphase eines keramischen Materials erfolgt.

5. Verfahren nach Anspruch 4, dadurch gekennzeichnet,
– dass das keramische Material Siliciumcarbid ist.

6. Verfahren nach einem der Ansprüche 1 bis 5, dadurch gekennzeichnet,
– dass man zwischen den zu klebenden Teilen eine Schicht mit 20 bis 50 Gew.teilen Harz und $60 \times$ bis $140 \times$ Gew.teilen von Füllstoffen anordnet, wobei $\times$ das Verhältnis zwischen der Dichte des Materials der Füllstoffe und der Dichte des Kohlenstoffs ist.

7. Anwendung des Verfahrens nach einem der Ansprüche 1 bis 6 zur Herstellung eines starren Düsengehäuses durch Kleben von Teilen, die aus einem teilweise verdichteten porösen zusammengesetzten Material Kohlenstoff-Kohlenstoff besteht.

Fig-1

Fig-2

Fig-3

Fig-4